# EUROPEAN PATENT SPECIFICATION

(11) **EP 2 822 353 B1**
(45) Date of publication and mention of the grant of the patent: **30.08.2017**
(21) Application number: 12870047.3
(22) Date of filing: 01.03.2012
(51) Int. Cl.: H04W 88/06, H04M 1/725

(54) **MULTI-CARD MOBILE PHONE AND DISPLAY METHOD**
MEHRARTENMOBILTELEFON UND ANZEIGEVERFAHREN
TÉLÉPHONE MOBILE MULTICARTE ET PROCÉDÉ D'AFFICHAGE

(43) Date of publication of application: 07.01.2015
(73) Proprietor: Yulong Computer Telecommunication Technologies (Shenzhen) Co., Ltd., Guangdong 518057 (CN)
(72) Inventor: YU, Huijuan, Shenzhen Guangdong 518057 (CN); HE, Xiaoying, Shenzhen Guangdong 518057 (CN)
(74) Representative: Michalski Hüttermann & Partner Patentanwälte mbB
(86) International application number: PCT/CN2012/071817
(87) International publication number: WO 2013/127082

(56) References cited:
- EP-A1- 2 043 395
- EP-A2- 2 019 540
- WO-A1-2008/143148
- CN-A- 101 043 677
- CN-A- 101 287 243
- CN-A- 101 854 412
- US-A1- 2008 064 443
- US-A1- 2010 159 988
- US-A1- 2010 222 104

## Description

### FIELD OF THE INVENTION

The present invention involves the field of communication technologies, and specifically, to a multi-card mobile phone and a displaying method.

### BACKGROUND OF THE INVENTION

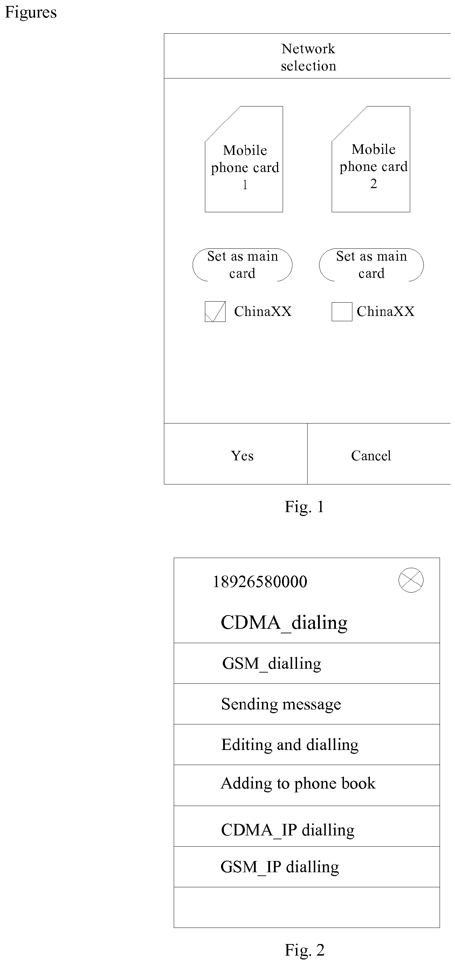

Currently, during the use of a multi-card mobile phone, if multiple mobile phone cards are inserted into the mobile phone, for example, two mobile phone cards are inserted into a dual-card mobile phone, the mobile phone displays an interface of dual-card operation, the dual-card selection interface shown in Fig. 1 and the collaborative menu operation interface shown in Fig. 2, and if only one mobile phone card is inserted, the mobile phone still displays the interface of dual-card operation, that is, the interface layout of the mobile phone cannot be dynamically changed according to a current card insertion situation, so that the user will undergo complex operation steps and inconvenient use in the situation of a single card, and the operation interface is not simple, which would easily have the user affected by the operation items of other mobile phone cards and then render misoperation.

WO 2008143148 A1 describes a communication terminal comprising: a readout unit which reads out, from a plurality of storage media each storing an identifier concerning a communication line, the identifiers; and a communication unit which determines the communication lines based on the identifiers read out by the readout unit, and performs communication using the determined communication lines.

EP 2043395 A1 describes a dual-SIM mobile terminal which checks the number of installed SIM cards during booting, and activates and deactivates the SIM switching mode according to the identified SIM card information.

US 2010159988 A1 describes a method of providing a tool kit menu of a multi-standby terminal for inserting at least two user identity cards including receiving a first tool kit menu list included in a first user identity card and receiving a second tool kit menu list included in a second user identity card. US2008064443 A1 describes a method for setting a service in a mobile communication terminal including at least first and second user identity cards. The method includes selecting the first identity card to be used for mobile communication, and requesting services directed to the second identity card be forwarded to the first identity card.

Therefore, a display technology is desired, which can prevent the user from being affected by invalid operation items and display more user-friendly operation interfaces that comply with actual use occasions.

### SUMMARY OF THE INVENTION

In view of the above background art, one technical problem to be solved by the present invention is to provide a multi-card mobile phone, and another technical problem to be solved by the present invention is to provide a displaying method, which can dynamically adjust the layout of the operation interface according to the card insertion situation of the multi-card mobile phone.
The problem is solved by the features of the independent claims. Preferred embodiments are defined by the features of the dependent claims.

According to an exemplary embodiment, a multi-card mobile phone is provided, comprising: a detection unit which detects the number of mobile phone cards inserted into the multi-card mobile phone and transmits a detection result to a display unit; and the display unit which displays operation interface corresponding to the number of the inserted mobile phone cards according to the detection result.
In the above technical solution, preferably, the multi-card mobile phone comprises a multi-card single-mode mobile phone and a multi-card multi-mode mobile phone, and when the multi-card mobile phone is a multi-card multi-mode mobile phone, the detection unit is further used to detect the types of the mobile phone cards inserted into the multi-card multi-mode mobile phone, and the display unit displays operation interface corresponding to the number and the types of the mobile phone cards inserted into the multi-card multi-mode mobile phone.

When the multi-card mobile phone is a multi-card multi-mode mobile phone, interface display rules and resources (for example, the operation menu items corresponding to the mobile phone card) corresponding to one mobile phone card and a corresponding type can be preset, interface display rules and resources corresponding to two mobile phone cards and corresponding types can be preset, interface display rules and resources corresponding to three mobile phone cards and corresponding types can be preset, and etc. When one mobile phone card is inserted, an operation interface (including functional items) corresponding to the one mobile phone card is shown according to the interface display rules and resources corresponding to one mobile phone card and a corresponding type, and when three mobile phone cards are inserted, operation interfaces (including operation menu items) corresponding to the three mobile phone cards are shown according to the interface display rules and resources corresponding to three mobile phone cards and corresponding types. Therefore, the operation interfaces can be adjusted dynamically according to the card insertion situation of the multi-card mobile phone.

Likewise, if the multi-card mobile phone is a multi-card single-mode mobile phone, interface display rules and resources corresponding to one mobile phone card are preset, interface display rules and resources corresponding to two mobile phone cards are preset, and it is unnecessary to consider the types of the mobile phone cards.

In the above technical solution, preferably, the detection unit is further used to further detect whether one or more of the multiple mobile phone cards are invalid upon detecting that the multi-card mobile phone has multiple mobile phone cards therein; and the display unit displays operation interface corresponding to valid mobile phone cards in the multiple mobile phone cards.

Therefore, if some mobile phone cards are damaged, only operation interface relevant to valid cards can be displayed, for example, two mobile phone cards are inserted into the multi-card mobile phone, operation interface relevant to the two mobile phone cards should have been displayed, while one of the mobile phone cards has been damaged, then the operation interface relevant to the remaining one valid mobile phone card is displayed, or, if only one mobile phone card is inserted into the multi-card mobile phone, the operation interface relevant to the one mobile phone card is displayed.

In the above technical solution, preferably, the detection unit is further used to further detect signal intensities of communication networks respectively corresponding to multiple mobile phone cards upon detecting that the multi-card mobile phone has the multiple mobile phone cards therein; and the display unit displays an operation interface corresponding to a mobile phone card corresponding to a communication network which signal intensity is larger than a preset threshold value.

It needs to be indicated that, when the multi-card mobile phone is a multi-card multi-mode mobile phone, a corresponding signal intensity preset threshold value can be set for the communication network of each communication mode, thus, for a tri-card dual-mode mobile phone, there can be two signal intensity threshold values. If the multi-card mobile phone is a multi-card single-mode mobile phone, one signal intensity threshold value can be set.

The intensities of the communication networks of the multiple mobile phone cards can be detected, for example, the mobile phone card with the strongest communication network can be set as a main card, the user does not need to select, then the operation is simple and the operation interface corresponding to one mobile phone card is displayed, invalid operation items are hidden automatically, and thus operation efficiency is improved.

In the above technical solution, preferably, the display unit can further comprise a storage subunit: when the multi-card mobile phone is a multi-card single-mode mobile phone, the storage subunit stores operation interface data corresponding to the number of the mobile phone cards that can be used by the multi-card mobile phone for the selective display of the display unit; and when the multi-card mobile phone is a multi-card multi-mode mobile phone, the storage subunit stores operation interface data corresponding to the number and the types of the mobile phone cards that can be used by the multi-card mobile phone for the selective display of the display unit.

In the above technical solution, preferably, the display unit can comprise: a switch subunit which receives user's selection instruction and switches displayed operation interfaces.

According to another exemplary embodiment, a displaying method is further provided, comprising following steps: detecting the number of mobile phone cards inserted into a multi-card mobile phone; and displaying operation interfaces corresponding to the number of the inserted mobile phone cards according to a detection result.
In the above technical solution, preferably, it can further comprise: the multi-card mobile phone comprises a multi-card single-mode mobile phone and a multi-card multi-mode mobile phone, and when the multi-card mobile phone is a multi-card multi-mode mobile phone, further detecting the types of the mobile phone cards inserted into the multi-card multi-mode mobile phone; and displaying operation interface corresponding to the number and the types of the mobile phone cards inserted into the multi-card multi-mode mobile phone.
In the above technical solution, preferably, it can further comprise: displaying operation interface corresponding to valid mobile phone cards in multiple mobile phone cards upon detecting that the multi-card mobile phone has multiple mobile phone cards inserted therein and one or more of the multiple mobile phone cards are invalid.
In the above technical solution, preferably, it can further comprise: further detecting signal intensities of communication networks respectively corresponding to multiple mobile phone cards upon detecting that the multi-card mobile phone has the multiple mobile phone cards therein, and displaying an operation interface corresponding to a mobile phone card corresponding to a communication network which signal intensity is larger than a preset threshold value.
In the above technical solution, preferably, it can further comprise: when the multi-card mobile phone is a multi-card single-mode mobile phone, presetting operation interface data corresponding to the number of the mobile phone cards that can be used by the multi-card mobile phone; and when the multi-card mobile phone is a multi-card multi-mode mobile phone, presetting operation interface data corresponding to the number and the types of the mobile phone cards that can be used by the multi-card mobile phone.

In the above technical solution, preferably, it can further comprise: receiving user's selection instruction and switching displayed operation interfaces.

The technical solution according to the present invention can dynamically adjust corresponding operation interface and automatically hide or combine the operation items of invalid cards according to the card insertion situation of the multi-card mobile phone, and during operation, the user does not need to make multiple selections and can quickly finish the operations, and then the possibility of misoperation is lowered while the operation efficiency is improved.

### BRIEF DESCRIPTION OF THE DRAWINGS

Fig. 1 is a schematic diagram of a dual-card selection operation interface of a multi-card mobile phone into which two cards are inserted in the related art;
Fig. 2 is a schematic diagram of a collaborative menu operation interface of a multi-card mobile phone into which two cards are inserted in the related art;
Fig. 3 is a block diagram of a multi-card multi-standby terminal according to the embodiment of the present invention;
Fig. 4 is a schematic diagram of the selection operation interface of the multi-card mobile phone according to the embodiment of the present invention into which one card is inserted;
Fig. 5 is a schematic diagram of the collaborative menu operation interface of the multi-card mobile phone according to the embodiment of the present invention into which one card is inserted;
Fig. 6 is a flow chart of the displaying method according to the embodiment of the present invention; and
Fig. 7 is a flow chart of the displaying method according to the embodiment of the present invention.

### DETAILED DESCRIPTION OF THE PRESENT INVENTION

To more clearly understand the above objects, features and advantages of the present invention, the present invention will be further detailed hereinafter in combination with the accompanying drawings and embodiments.

Many details are described hereinafter for fully understanding the present invention, however, the present invention can also be implemented by embodiments other than those described herein, thus, the present invention is not restricted to or limited by the following specific embodiments.

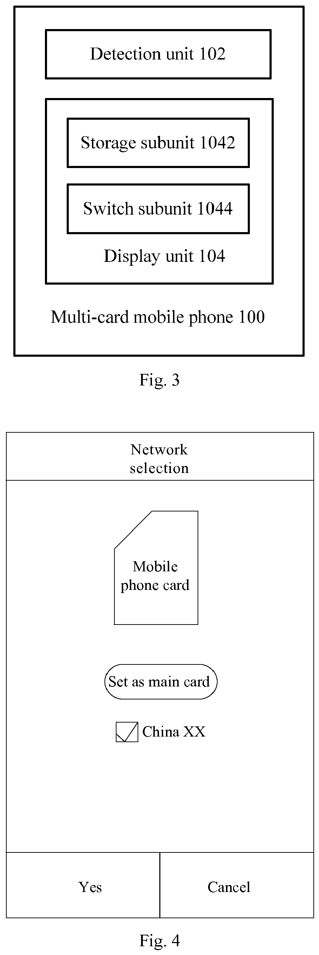

Fig. 3 is a block diagram of a multi-card multi-standby terminal according to an exemplary embodiment of the present invention.

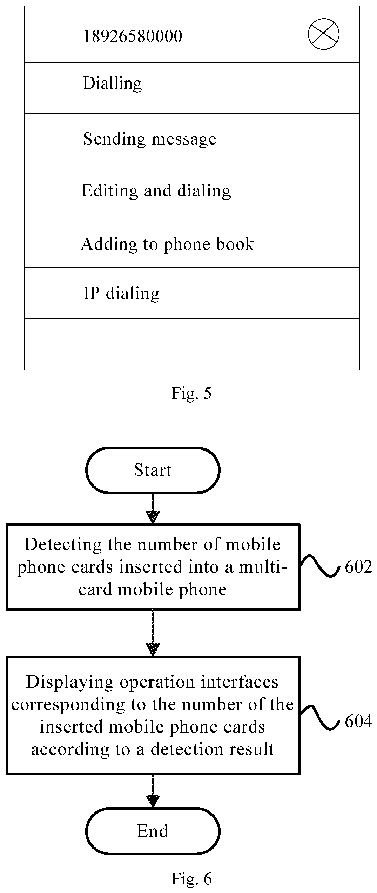

As shown in Fig. 3, the multi-card mobile phone 100 according to the exemplary embodiment of the present invention comprises: a detection unit 102 which detects the number of mobile phone cards inserted into the multi-card mobile phone 100 and transmits the number and the types of the mobile phone cards as detected to a display unit 104; and the display unit 104 which displays operation interface corresponding to the number and the types of the inserted mobile phone cards according to the detection result.
For example, if there is one mobile phone card, operation interface data corresponding to the one mobile phone card and its type is acquired and displayed.
As shown in Fig. 4, when only one mobile phone card is inserted into the multi-card mobile phone according to the embodiment of the present invention, the dual-card selection interface as shown in Fig. 1 will not be displayed, while a single-card interface is displayed, and there are no excessive operation items. During specific operations, as shown in Fig. 5, the collaborative menu only displays operation items relevant to one mobile phone card, and the operation items of invalid cards are hidden automatically and only the operation items of the current valid card are maintained, thus, during the user's operation, the user does not need to select and can finish the operations quickly, and interference from invalid interface elements and the possibility of misoperation are lowered.

In the above technical solution, preferably, the multi-card mobile phone comprises a multi-card single-mode mobile phone and a multi-card multi-mode mobile phone, and when the multi-card mobile phone is a multi-card multi-mode mobile phone, the detection unit 102 is further used to detect the types (the types of the mobile phone cards, for example, can be a UIM card, a SIM card and a USIM card) of the mobile phone cards inserted into the multi-card multi-mode mobile phone, and the display unit 104 displays operation interface corresponding to the number and the types of the mobile phone cards inserted into the multi-card multi-mode mobile phone.

Please referring to Fig. 3 again, the display unit 104 can comprise a storage subunit 1042: when the multi-card mobile phone is a multi-card single-mode mobile phone, the storage subunit 1042 stores operation interface data corresponding to the number of the mobile phone cards that can be used by the multi-card mobile phone for the selective display of the display unit 104; and when the multi-card mobile phone is a multi-card multi-mode mobile phone, the storage subunit 1042 stores operation interface data corresponding to the number and the types of the mobile phone cards that can be used by the multi-card mobile phone for the selective display of the display unit 104.

When the multi-card mobile phone is a multi-card multi-mode mobile phone, interface display rules and resources (for example, the operation menu items corresponding to the mobile phone card) corresponding to one mobile phone card and a corresponding type can be preset, interface display rules and resources corresponding to two mobile phone cards and corresponding types can be preset, interface display rules and resources corresponding to three mobile phone cards and corresponding types can be preset, and etc. When one mobile phone card is inserted, an operation interface (including functional items) corresponding to the one mobile phone card is shown according to the interface display rules and resources corresponding to one mobile phone card and a corresponding type, and when three mobile phone cards are inserted, operation interfaces (including operation menu items) corresponding to the three mobile phone cards are shown according to the interface display rules and resources corresponding to three mobile phone cards and corresponding types. Therefore, the operation interface can be adjusted dynamically according to the card insertion situation of the multi-card mobile phone.

Likewise, if the multi-card mobile phone is a multi-card single-mode mobile phone, interface display rules and resources corresponding to one mobile phone card are preset, interface display rules and resources corresponding to two mobile phone cards are preset, and it is unnecessary to consider the types of the mobile phone cards.

In the above technical solution, preferably, the detection unit 102 is further used to further detect whether there are invalid mobile phone cards (the invalid mobile phone cards include a damaged mobile phone card, for example, the card is inserted into mobile phones of different modes or old mobile phones, as the card slot port voltage does not comply with the voltage applicable to the mobile phone card, and then the card is burned or damaged by human; a mobile phone card is burned automatically as a PUK code is input more than ten times after PIN locking; a mobile phone card cannot be correctly identified due to poor contact between the mobile phone card seat and the card) in the multiple mobile phone cards upon detecting that the multi-card mobile phone 102 has multiple mobile phone cards therein; and the display unit 104 displays operation interface corresponding to valid mobile phone cards in the multiple mobile phone cards.

Therefore, if some mobile phone cards are damaged, only operation interface relevant to valid cards can be displayed, for example, two mobile phone cards are inserted into the multi-card mobile phone, operation interface relevant to the two mobile phone cards should have been displayed, while one of the mobile phone cards has been damaged, then the operation interface relevant to the remaining one valid mobile phone card is displayed, or, if only one mobile phone card is inserted into the multi-card mobile phone, the operation interface relevant to the one mobile phone card is displayed.

In a preferred embodiment, the detection unit 102 is further used to further detect signal intensities of communication networks respectively corresponding to multiple mobile phone cards upon detecting that the multi-card mobile phone 100 has the multiple mobile phone cards therein, and selects the communication networks which signal intensities are larger than or equal to a preset threshold value; and the display unit 104 displays operation interfaces corresponding to corresponding mobile phone cards which signal intensities are larger than or equal to the preset threshold value.
It needs to be indicated that, when the multi-card mobile phone is a multi-card multi-mode mobile phone, a corresponding signal intensity preset threshold value can be set for the communication network of each communication mode, thus, for a tri-card dual-mode mobile phone, there can be two signal intensity threshold values. If the multi-card mobile phone is a multi-card single-mode mobile phone, one signal intensity threshold value can be set.
The intensities of the communication networks of the multiple mobile phone cards can be detected, for example, the mobile phone card with the strongest communication network can be set as a main card, the user does not need to select, then the operation is simple and the operation interface corresponding to one mobile phone card is displayed, invalid operation items are hidden automatically, and thus operation efficiency is improved.
In the above technical solution, preferably, the display unit 104 can comprise: a switch subunit 1044 which receives user's selection instruction and switches displayed operation interfaces.
Of course, when multiple cards are inserted, if the user needs to display the operation interface corresponding to the multiple cards, the currently dispalyed operation interface corresponding to a single card can be replaced with the operation interface corresponding to the multiple cards, and this complies with user's various needs and is applicable to more use occasions.

Herein, one skilled in the art should understand that the multi-card mobile phones in the above technical solutions comprise, but not limited to, a dual-card dual-standby mobile terminal, a tri-card tri-standby mobile terminal and a quad-card quad-standby mobile terminal.

Fig. 6 is a flow chart of the displaying method according to the embodiment of the present invention.

As shown in Fig. 6, the displaying method according to the embodiment of the present invention comprises: step 602, detecting the number of mobile phone cards inserted into a multi-card mobile phone; and step 604, displaying operation interface corresponding to the number of the inserted mobile phone cards according to a detection result.

For example, when there is one mobile phone card, operation interface data corresponding to the one mobile phone card is acquired and then displayed.

In the above technical solution, preferably, it can further comprise: the multi-card mobile phone comprises a multi-card single-mode mobile phone and a multi-card multi-mode mobile phone, and when the multi-card mobile phone is a multi-card multi-mode mobile phone, further detecting the types (the types of the mobile phone cards, for example, can be a UIM card, an SIM card and a USIM card) of the mobile phone cards inserted into the multi-card multi-mode mobile phone; and displaying operation interface corresponding to the number and the types of the mobile phone cards inserted into the multi-card multi-mode mobile phone.

In the above technical solution, preferably, it can further comprise: when the multi-card mobile phone is a multi-card single-mode mobile phone, presetting operation interface data corresponding to the number of the mobile phone cards that can be used by the multi-card mobile phone; and when the multi-card mobile phone is a multi-card multi-mode mobile phone, presetting operation interface data corresponding to the number and the types of the mobile phone cards that can be used by the multi-card mobile phone.

When the multi-card mobile phone is a multi-card multi-mode mobile phone, interface display rules and resources (for example, the operation menu items corresponding to the mobile phone card) corresponding to one mobile phone card and a corresponding type can be preset, interface display rules and resources corresponding to two mobile phone cards and corresponding types can be preset, interface display rules and resources corresponding to three mobile phone cards and corresponding types can be preset, and etc. When one mobile phone card is inserted, an operation interface (including functional items) corresponding to the one mobile phone card is shown according to the interface display rules and resources corresponding to one mobile phone card and a corresponding type, and when three mobile phone cards are inserted, operation interfaces (including operation menu items) corresponding to the three mobile phone cards are shown according to the interface rules and resources corresponding to three mobile phone cards. Therefore, the operation interfaces can be adjusted dynamically according to the card insertion situation of the multi-card mobile phone.
Likewise, if the multi-card mobile phone is a multi-card single-mode mobile phone, interface display rules and resources corresponding to one mobile phone card are preset, interface display rules and resources corresponding to two mobile phone cards are preset, and it is unnecessary to consider the types of the mobile phone cards.
In the above technical solution, preferably, step 602 can further comprise: displaying operation interface corresponding to valid mobile phone cards in multiple mobile phone cards upon detecting that the multi-card mobile phone has multiple mobile phone cards inserted therein and one or more of the multiple mobile phone cards are invalid.

In the preferred embodiment, step 602 can further comprise: further detecting signal intensities of communication networks respectively corresponding to multiple mobile phone cards upon detecting that the multi-card mobile phone has the multiple mobile phone cards therein, and displaying an operation interface corresponding to a mobile phone card corresponding to a communication network which signal intensity is larger than a preset threshold value.
It needs to be indicated that, when the multi-card mobile phone is a multi-card multi-mode mobile phone, a corresponding signal intensity threshold value can be set for the communication network of each communication mode, thus, for a tri-card dual-mode mobile phone, there can be two signal intensity threshold values. If the multi-card mobile phone is a multi-card single-mode mobile phone, one signal intensity threshold value can be set.

The intensities of the communication networks of the multiple mobile phone cards can be detected, for example, the mobile phone card with the strongest communication network can be set as a main card, the user does not need to select, then the operation is simple and the operation interface corresponding to one mobile phone card is displayed, invalid operation items are hidden automatically, and thus operation efficiency is improved.

In the above technical solution, preferably, step 602 can further comprise: receiving user's selection instruction and switching displayed operation interfaces.

Of course, when multiple cards are inserted, if the user needs to display the operation interface corresponding to the multiple cards, the currently displayed operation interface corresponding to a single card can be replaced with the operation interface corresponding to the multiple cards, and this complies with user's various needs and is applicable to more use occasions.

The above technical solutions can dynamically adjust corresponding operation interface and automatically hide or combine the operation items of invalid cards according to the card insertion situation of the multi-card mobile phone, and during operation, the user does not need to make multiple selections and can quickly finish the operations, and then the possibility of misoperation is lowered while the operation efficiency is improved.

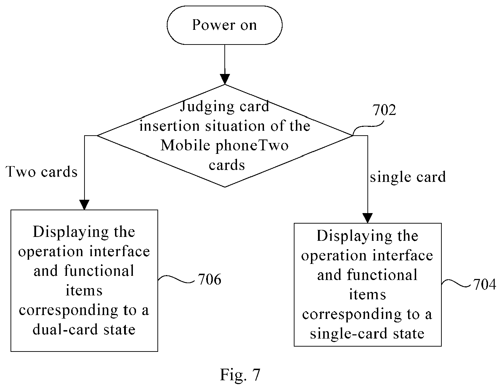

The displaying method according to the present invention will be further detailed hereinafter in combination with Fig. 7.

The rules of multiple interface layouts are preset in a mobile phone (which can be a dual-card single-mode mobile phone in the present embodiment) and the relevant resources (for example, operation menu items) of different interface layouts are preset, when the user powers on and detects the network, the user's current card insertion situation is judged, different interface rules and resources are selected according to the card insertion situation, the interfaces are adjusted and switched dynamically, and thus an operation interface more complying with the current card insertion situation is formed.

As shown in Fig. 7, in step 702, when the mobile phone is powered on, the card insertion situation of the mobile phone is detected, the number of the mobile phone cards inserted into the mobile phone is judged, and when it is judged that there are two mobile phone cards inserted into the mobile phone, the flow enters step 706, and then enters step 704 upon judging that only one mobile phone card is inserted into the mobile phone.

In step 706, the operation interface and functional items corresponding to a dual-card state are displayed. In this situation, the dual-card mobile phone interface is displayed normally, the operation state in the dual-card interface keeps a current state, and during operation the user needs to select different networks, referring to Figs. 1 and 2. In addition, a threshold value can be set to the signal intensities of the communication networks, when it is detected that the signal intensities of the communication networks of two cards are smaller than the threshold value, the corresponding operation interfaces are not displayed. If the mobile phone is a multi-card multi-mode mobile phone, the network of each communication mode corresponds to a threshold value, and only the operation interface of the communication network which signal intensity is larger than or equal to the corresponding threshold value is displayed.

In step 704, the operation interface and functional items corresponding to a single-card state are displayed. If only one card is inserted currently, all interface layouts relating to dual-card operation are automatically adjusted to the interface layouts of single-card operation, and the relevant operation items of invalid cards are all hidden or combined automatically (see Figs. 4 and 5), and during operation the user does not need to select and then can finish the operation quickly.
The technical solutions according to the present invention can dynamically adjust interface layouts and operation logic according to the card insertion situation of the multi-card multi-standby mobile phone, improve user's operation efficiency, better use interface space and lower the possibility of misoperation.
Described above are merely preferred embodiments of the present invention and are not intended to limit the present invention. For one skilled in the art, the present invention may have various alterations and changes.

## Claims

1. A multi-card mobile phone (100), comprising:
a detection unit (102) adapted to detect the number of mobile phone cards inserted into the multi-card mobile phone (100) after being powered on;
the detection unit (102) further adapted to detect signal intensities of respective communication networks corresponding to the number of mobile phone cards inserted in the multi-card mobile phone (100); and
a display unit (104) adapted to display an operation interface for each of the inserted mobile phone cards having a communication network with a signal intensity larger than or equal to a preset threshold value.

2. The multi-card mobile phone (100) according to claim 1, wherein
the multi-card mobile phone (100) comprises a multi-card single-mode mobile phone and a multi-card multi-mode mobile phone, and
when the multi-card mobile phone (100) is a multi-card multi-mode mobile phone, the detection unit (102) is further adapted to detect the types of the mobile phone cards inserted into the multi-card multi-mode mobile phone, and
the display unit (104) is adapted to display operation interface corresponding to the number and the types of the mobile phone cards inserted into the multi-card multi-mode mobile phone.

3. The multi-card mobile phone (100) according to claim 1, wherein
the detection unit (102) is further adapted to further detect whether one or more of the multiple mobile phone cards are invalid upon detecting that the multi-card mobile phone (100) has multiple mobile phone cards therein; and
the display unit (104) is adapted to display operation interface corresponding to valid mobile phone cards in the multiple mobile phone cards.

4. The multi-card mobile phone (100) according to claim 2, wherein, the display unit (104) comprises a storage subunit (1042):
when the multi-card mobile phone (100) is a multi-card single-mode mobile phone, the storage subunit (1042) is adapted to store operation interface data corresponding to the number of the mobile phone cards that can be used by the multi-card mobile phone (100) for the selective display of the display unit (104); and
when the multi-card mobile phone (100) is a multi-card multi-mode mobile phone, the storage subunit (1042) is adapted to store operation interface data corresponding to the number and the types of the mobile phone cards that can be used by the multi-card mobile phone (100) for the selective display of the display unit (104).

5. The multi-card mobile phone (100) according to any of claims 1 to 4, wherein, the display unit (104) comprises:
a switch subunit (1044) adapted to receive user's selection instruction and adapted to switch displayed operation interfaces.

6. A displaying method, comprising following steps:
detecting the number of mobile phone cards inserted into a multi-card mobile phone (100) after the multi-card mobile phone (100) is powered on;
further detecting signal intensities of respective communication networks corresponding to the number of mobile phone cards inserted in the multi-card mobile phone (100); and
displaying an operation interface for each of the inserted mobile phone cards having a communication network with a signal intensity larger than or equal to a preset threshold value.

7. The displaying method according to claim 6, further comprising:
the multi-card mobile phone (100) comprises a multi-card single-mode mobile phone and a multi-card multi-mode mobile phone, and
when the multi-card mobile phone (100) is a multi-card multi-mode mobile phone, further detecting the types of the mobile phone cards inserted into the multi-card multi-mode mobile phone; and
displaying operation interface corresponding to the number and the types of the mobile phone cards inserted into the multi-card multi-mode mobile phone.

8. The displaying method according to claim 6, further comprising:
displaying operation interface corresponding to valid mobile phone cards in multiple mobile phone cards upon detecting that the multi-card mobile phone (100) has multiple mobile phone cards inserted therein and one or more of the multiple mobile phone cards are invalid.

9. The displaying method according to claim 7, further comprising:
when the multi-card mobile phone (100) is a multi-card single-mode mobile phone, presetting operation interface data corresponding to the number of the mobile phone cards that can be used by the multi-card mobile phone (100); and
when the multi-card mobile phone (100) is a multi-card multi-mode mobile phone, presetting operation interface data corresponding to the number and the types of the mobile phone cards that can be used by the multi-card mobile phone (100).

10. The displaying method according to any of claims 6 to 9, further comprising:
receiving user's selection instruction and switching displayed operation interfaces.

## Patentansprüche

1. Multi-Card-Mobiltelefon (100) mit:
einer Erfassungseinheit (102), die dazu geeignet ist, die Anzahl von Mobiltelefonkarten zu erfassen, die in das Multi-Card-Mobiltelefon (100) eingesetzt sind, nachdem es eingeschaltet ist, wobei die Erfassungseinheit (102) ferner dazu geeignet ist, Signalintensitäten jeweiliger Kommunikationsnetze zu erfassen, die der Anzahl der in das Multi-Card-Mobiltelefon (100) eingesetzten Mobiltelefonkarten entsprechen; und
einer Displayeinheit (104), die dazu geeignet ist, eine Bedienoberfläche für jede der eingesetzten Mobiltelefonkarten darzustellen, die einem Kommunikationsnetz zugeordnet sind, dessen Signalintensität größer oder gleich einem voreingestellten Schwellenwert ist.

2. Multi-Card-Mobiltelefon (100) nach Anspruch 1, wobei
das Multi-Card-Mobiltelefon (100) ein Multi-Card-Single-Mode-Mobiltelefon und ein Multi-Card-Multi-Mode-Mobiltelefon aufweist, wobei
wenn das Multi-Card-Mobiltelefon (100) ein Multi-Card-Multi-Mode-Mobiltelefon ist, die Erfassungseinheit (102) ferner dazu geeignet ist, die Typen der in das Multi-Card-Multi-Mode-Mobiltelefon eingesetzten Mobiltelefonkarten zu erfassen, und
die Displayeinheit (104) dazu geeignet ist, eine Bedienoberfläche darzustellen, die der Anzahl und den Typen der in das Multi-Card-Multi-Mode-Mobiltelefon eingesetzten Mobiltelefonkarten entspricht.

3. Multi-Card-Mobiltelefon (100) nach Anspruch 1, wobei
die Erfassungseinheit (102) ferner dazu geeignet ist, zu erfassen, ob eine oder mehrere der mehreren Mobiltelefonkarten ungültig sind, nachdem erfasst wurde, dass im Multi-Card-Mobiltelefon (100) mehrere Mobiltelefonkarten eingesetzt sind, und
die Displayeinheit (104) dazu geeignet ist, eine Bedienoberfläche darzustellen, die gültigen Mobiltelefonkarten unter den mehreren Mobiltelefonkarten entspricht.

4. Multi-Card-Mobiltelefon (100) nach Anspruch 2, wobei die Displayeinheit (104) eine Speicheruntereinheit (1042) aufweist, wobei,
wenn das Multi-Card-Mobiltelefon (100) ein Multi-Card-Single-Mode-Mobiltelefon ist, die Speicheruntereinheit (1042) dazu geeignet ist, Bedienoberflächendaten, die der Anzahl der Mobiltelefonkarten entsprechen, die durch das Multi-Card-Mobiltelefon (100) verwendbar sind, für eine selektive Darstellung der Displayeinheit (104) zu speichern, und
wenn das Multi-Card-Mobiltelefon (100) ein Multi-Card-Multi-Mode-Mobiltelefon ist, die Speicheruntereinheit (1042) dazu geeignet ist, Bedienoberflächendaten, die der Anzahl und den Typen der Mobiltelefonkarten entsprechen, die durch das Multi-Card-Mobiltelefon (100) verwendbar sind, für eine selektive Darstellung der Displayeinheit (104) zu speichern.

5. Multi-Card-Mobiltelefon (100) nach einem der Ansprüche 1 bis 4, wobei die Displayeinheit (104) aufweist:
eine Schaltuntereinheit (1044), die dazu geeignet ist, Auswahlbefehle eines Benutzers zu empfangen und die Bedienoberflächen umzuschalten.

6. Darstellungsverfahren mit den Schritten:
Erfassen der Anzahl von in ein Multi-Card-Mobiltelefon (100) eingesetzten Mobiltelefonkarten, nachdem das Multi-Card-Mobiltelefon (100) eingeschaltet ist;
Erfassen von Signalintensitäten jeweiliger Kommunikationsnetze, die der Anzahl von in das Multi-Card-Mobiltelefon (100) eingesetzten Mobiltelefonkarten entsprechen; und
Darstellen einer Bedienoberfläche für jede der eingesetzten Mobiltelefonkarten, die einem Kommunikationsnetzwerk mit einer Signalintensität zugeordnet sind, die größer oder gleich einem voreingestellten Schwellenwert ist.

7. Darstellungsverfahren nach Anspruch 6, wobei ferner
das Multi-Card-Mobiltelefon (100) ein Multi-Card-Single-Mode-Mobiltelefon und ein Multi-Card-Multi-Mode-Mobiltelefon aufweist, wobei,
wenn das Multi-Card-Mobiltelefon (100) ein Multi-Card-Multi-Mode-Mobiltelefon ist, ferner die Typen der in das Multi-Card-Multi-Mode-Mobiltelefon eingesetzten Mobiltelefonkarten erfasst werden, und
die Bedienoberfläche dargestellt wird, die der Anzahl und den Typen der in das Multi-Card-Multi-Mode-Mobiltelefon eingesetzten Mobiltelefonkarten entspricht.

8. Darstellungsverfahren nach Anspruch 6, ferner mit dem Schritt:
Darstellen einer Bedienoberfläche, die gültigen Mobiltelefonkarten unter den mehreren Mobiltelefonkarten entspricht, nachdem erfasst wurde, dass im Multi-Card-Mobiltelefon (100) mehrere Mobiltelefonkarten eingesetzt sind und eine oder mehrere der mehreren Mobiltelefonkarten ungültig sind.

9. Darstellungsverfahren nach Anspruch 7, ferner mit den Schritten:
Voreinstellen von Bedienoberflächendaten, die der Anzahl der durch das Multi-Card-Mobiltelefon (100) verwendbaren Mobiltelefonkarten entsprechen, wenn das Multi-Card-Mobiltelefon (100) ein Multi-Card-Single-Mode-Mobiltelefon ist; und
Voreinstellen von Bedienoberflächendaten, die der Anzahl und den Typen der durch das Multi-Card-Mobiltelefon (100) verwendbaren Mobiltelefonkarten entsprechen, wenn das Multi-Card-Mobiltelefon (100) ein Multi-Card-Multi-Mode-Mobiltelefon ist.

10. Darstellungsverfahren nach einem der Ansprüche 6 bis 9, ferner mit dem Schritt zum Empfangen von Auswahlbefehlen eines Benutzers und Schalten der dargestellten Bedienoberflächen.

## Revendications

1. Téléphone mobile multicartes (100) comprenant :
une unité de détection (102) adaptée pour détecter le nombre de cartes de téléphone mobile insérées dans le téléphone mobile multicartes (100) après avoir été mis en marche ; l'unité de détection (102) étant en outre adaptée pour détecter des intensités de signal de réseaux de communication respectifs correspondant au nombre de cartes de téléphone mobile insérées dans le téléphone mobile multicartes ; et
une unité d'affichage (104) adaptée pour afficher une interface opérationnelle pour chacune des cartes de téléphone mobile insérée ayant un réseau de communication avec une intensité de signal supérieure ou égale à une valeur de seuil préréglée.

2. Téléphone mobile multicartes (100) selon la revendication 1, où
le téléphone mobile multicartes (100) comprend un téléphone mobile multicartes en mode unique et un téléphone mobile multicartes multimode, et
lorsque le téléphone multicartes (100) est un téléphone mobile multicartes multimode, l'unité de détection est en outre adaptée pour détecter les types de cartes de téléphone mobile insérés dans le téléphone mobile multicartes multimode, et
l'unité d'affichage (104) est adaptée pour afficher l'interface opérationnelle correspondant au nombre et aux types de cartes de téléphone mobile insérées dans le téléphone mobile multicartes multimode.

3. Téléphone mobile multicartes (100) selon la revendication 1, où
l'unité de détection (102) est en outre adaptée pour détecter en outre si une ou plusieurs parmi les multiples cartes de téléphone mobile est(sont) invalide(s) lors de la détection que le téléphone mobile multicartes (100) a de multiples cartes de téléphone mobile à l'intérieur ; et
l'unité d'affichage (104) est adaptée pour afficher l'interface opérationnelle correspondant à des cartes de téléphone mobile valides dans les multiples cartes de téléphone mobile.

4. Téléphone mobile multicartes (100) selon la revendication 2, dans lequel l'unité d'affichage (104) comprend une sous-unité de mémoire (1042) :
lorsque le téléphone mobile multicartes (100) est un téléphone mobile multicartes en mode unique, la sous-unité de mémoire (1042) est adaptée pour stocker des données d'interface opérationnelle correspondant au nombre de cartes de téléphone mobile qui peuvent être utilisées par le téléphone mobile multicartes (100) pour l'affichage sélectif de l'unité d'affichage (104).

5. Téléphone mobile multicartes (100) selon l'une quelconque des revendications 1 à 4, dans lequel l'unité d'affichage (104) comprend :
une sous-unité de commutation (1044) adaptée pour recevoir une instruction de choix de l'utilisateur et adaptée pour commute les interfaces opérationnelles affichées.

6. Procédé d'affichage, comprenant les étapes suivantes :
détection du nombre de cartes de téléphone mobile insérées dans un téléphone mobile multicartes (100) après que le téléphone mobile multicartes (100) ait été allumé ;
détection en outre des intensités de signal des réseaux de communication respectifs correspondant au nombre de cartes de téléphone mobile insérées dans le téléphone mobile multicartes (100) ; et
affichage d'une interface opérationnelle pour chacune des cartes de téléphone mobiles insérées ayant un réseau de communication avec une intensité de signal supérieure ou égale à une valeur de seuil préréglée.

7. Procédé d'affichage selon la revendication 6, comprenant en outre :
le téléphone mobile multicartes (100) comprend un téléphone mobile multicartes en mode unique et un téléphone mobiles multicartes multimode, et
lorsque le téléphone mobile multicartes (100) est un téléphone mobile multicarte multimode, la détection en outre des types de cartes de téléphone mobiles insérées dans le téléphone mobile multicartes multimode ; et
une interface opérationnelle d'affichage correspondant au nombre et aux types de cartes de téléphone mobiles insérées dans le téléphone mobile multicartes multimode.

8. Procédé d'affichage selon la revendication 6, comprenant en outre :
une interface opérationnelle d'affichage correspondant à des cartes de téléphone mobile valides dans des cartes de téléphone mobile multiples après détection que le téléphone mobile multicartes (100) a de multiples cartes de téléphone mobile insérées et une ou plusieurs des multiples cartes de téléphone mobile est(sont) invalide(s).

9. Procédé d'affichage selon la revendication 7, comprenant en outre :
lorsque le téléphone mobile multicartes (100) est un téléphone mobile multicartes en mode unique, un préréglage de données d'interface opérationnelle correspondant au nombre de cartes de téléphone mobile qui peuvent être utilisées par le téléphone mobile multicartes (100), et
lorsque le téléphone mobile multicartes (100) est un téléphone mobile multicartes multimode, un préréglage de données d'interface opérationnelle correspondant au nombre et aux types de cartes de téléphone mobile qui peuvent être utilisées par le téléphone mobile multicartes (100).

10. Procédé d'affichage selon l'une quelconque des revendications 6 à 9, comprenant en outre :
la réception d'une instruction de choix de l'utilisateur et la commutation des interfaces opérationnelles affichées.
